Europäisches Patentamt

European Patent Office

Office européen des brevets

(11) Veröffentlichungsnummer: **0 172 482**
**A2**

(12) **EUROPÄISCHE PATENTANMELDUNG**

(21) Anmeldenummer: 85109813.7

(22) Anmeldetag: 05.08.85

(51) Int. Cl.⁴: **C 08 B 5/12**
**C 09 D 3/72**

(30) Priorität: 18.08.84 DE 3430437

(43) Veröffentlichungstag der Anmeldung:
26.02.86 Patentblatt 86/9

(84) Benannte Vertragsstaaten:
DE FR GB IT

(71) Anmelder: **Wolff Walsrode Aktiengesellschaft**
**Postfach**
**D-3030 Walsrode 1(DE)**

(72) Erfinder: **Lühmann, Erhard, Dipl.-Ing.**
**Kastanienweg 2**
**D-3036 Bomlitz 1(DE)**

(72) Erfinder: **Hoppe, Lutz, Dr.**
**Am Badeteich 8**
**D-3030 Walsrode 1(DE)**

(74) Vertreter: **Gremm, Joachim, Dr. et al,**
**Bayer AG Konzernverwaltung RP Patentabteilung**
**D-5090 Leverkusen, Bayerwerk(DE)**

(54) Mit tert. Alkoholen angefeuchtete Nitrocellulose und ihre Verwendung in Polyurethanlacke.

㉗ Mit Alkohol angefeuchtete Nitrocellulose, insbesondere für Polyurethanlacke, die dadurch gekennzeichnet ist, daß als Anfeuchtungsmittel ein niedriger aliphatischer tert. Alkohol verwendet wurde.

EP 0 172 482 A2

Wolff Walsrode AG 3030 Walsrode-Bomlitz
Str/ABc

**Mit tert. Alkoholen angefeuchtete Nitrocellulose und ihre Verwendung in Polyurethanlacke**

Es ist bereits bekannt, Nitrocellulose in Polyurethanlacke einzuarbeiten, wobei die Dispergierbarkeit der Pigmente und die Glätte des Überzuges verbessert und die Trockenzeit verkürzt wird. Da Nitrocellulose im trockenen Zustand leicht durch Stoß oder Reibung entzündet werden kann, müssen handelsüblichen Nitrocellulosen ein Anfeuchtungsmittel zugesetzt werden, um die Brandgefahr bei der Lagerung und Handhabung sowie beim Transport zu verringern. Als derartige Anfeuchtungsmittel eignen sich niedrige Alkohole wie z.B. Methanol, Ethanol, Isopropanol oder n-Butanol.

Beim Zusatz dieser Nitrocellulosen zu Polyurethanlacken besteht das Problem, daß der Alkohol in der Nitrocellulose mit den Isocyanatgruppen reagiert. Durch die Reaktion der Isocyanate mit Alkohol werden die zur Härtung des Überzugs notwendigen Vernetzungsreaktionen verringert und es bilden sich niedermolekulare Verbindungen, die als Weichmacher wirken. Hierdurch wird die Festig-

WW 5229

keit des Überzugs beeinträchtigt. Vorzugsweise setzt man daher Polyurethanlacken Nitrocellulose zu, die keine mit Isocyanaten reaktive Verbindungen, insbesondere keine Alkohole enthalten und welche bei der Reaktion mit Isocyanaten niedermolekularen Verbindungen ergeben.

Um diese Nachteile zu vermeiden, wird gemäß dem Stande der Technik empfohlen, die Nitrocellulose nach ihrer Herstellung oder die handelsübliche Nitrocellulose so zu bearbeiten, daß sie für Polyurethanlacke verwendet werden kann. Dabei wird entsprechend der Lehre der DE-OS 3 041 085 die nach der Herstellung mit einem Alkohol und/oder Wasser angefeuchtete Nitrocellulose in einem Lösungsmittel für Nitrocellulose oder in einem azeotropen Gemisch aus Löser und Nichtlöser für Nitrocellulose gelöst und destilliert, um den Alkohol und/oder das Wasser zutrennen.

Diese Verfahren zur Herstellung von mit flüssigen Kohlenwasserstoffverbindungen angefeuchteten Nitrocellulose ist aus sicherheitstechnischen Gründen sehr bedenklich und sehr kostenintensiv.

Dies gilt auch für die in dem US-PS 32 84 253 beschriebenen Verfahren zur Herstellung von mit flüssigen Kohlenwasserstoffen angefeuchtete Nitrocellulose, die in Polyurethan-Lacken verwendet wird. Auch hier erfolgt die Wasserabtrennung durch azeotrope Destillation.

WW 5229

überraschenderweise gelingt es nun, diese kostenintensive Behandlung der wasser- und alkoholfeuchten Nitrocellulose zu vermeiden und gleichzeitig eine brauchbare Polyurethanlackomponente zur Verfügung zu stellen, die zu keiner Qualitätsminderung des Lackes führt, wenn man die nach ihrer Herstellung wasserfeuchte Nitrocellulose mit flüssigen tert. Alkoholen behandelt. Zur Verflüssigung werden die tert. Alkohle bis zum Schmelzpunkt erwärmt oder Wasser oder entsprechender nicht verzweigten Alkohol in geringen Mengen zugesetzt. Bei Verwendung von tert. Butanol ist z.B. eine Erwärmung auf mindestens 25°C erforderlich oder der Zusatz von 1-4 % Wasser ausreichend.

Gegenstand der vorliegenden Erfindung ist daher eine mit Alkohol angefeuchtete Nitrocellulose als Komponente für Polyurethanlacke, die dadurch gekennzeichnet ist, daß sie nur mit einem niedrigen aliphatischen tert. Alkohol angefeuchtet ist, der gegebenenfalls geringe Mengen Wasser oder einen nicht verzweigten Alkohol enthält.

Die Verdrängung des Wasser aus der bei der Herstellung anfallenden wasserfeuchten Nitrocellulose durch den Alkohol kann nach allen bekannten Verfahren erfolgen. Vorzugsweise nach der Methode wie sie in der DE-OS 1 153 663 beschrieben wird, bis das Wasser kontinuierlich in einer Schubzentrifuge mit Siebboden im Gegenstrom mit Anfeuchtungsmittel verdrängt wird.

Als Ausgangs-Nitrocellulose kann jede wasserfeuchte Nitrocellulose mit einem Stickstoffgehalt von 10,2 - 12, 6Gew.-% in allen Viskositätsstufen verwendet werden.

WW 5229

0172482

Als aliphatische tert. Alkohole werden vorzugsweise solche mit bis zu $C_6$ verwendet, besonders bevorzugt tert.-Butanol. Für den Einsatz als Polyurethanlackkomponente sollte der Anfeuchtungsgehalt mit tert. Alkohol bei mindestens 25 Gew.-%, bezogen auf trockene Nitrocellulose, liegen. Zur Herstellung einer Polyurethanlackmischung werden 1 - 30 Gew.-%, vorzugsweise 3-20 Gew.-%, bezogen auf die Gesamtlackmischung, an erfindungsgemäß angefeuchtete Nitrocellulose verwendet.

WW 5229

<u>Beispiele</u>

Es werden Lacke nach folgender Zusammensetzung hergestellt:

| Lackmischung | 1[*] | 2 |
|---|---|---|
| | Gew.-% | Gew.-% |
| Nitrocellulose der Norm 24 E (atro) | 14,4 | 14,4 |
| Isopropanol | 7,8 | - |
| tert.-Butanol | - | 7,8 |
| Ethylacetat | 73,0 | 73,0 |
| aliphatisches Isocya-cyanat (75 %ig in Ethylgly-kolacetat) | 4,8 | 4,8 |

*) Vergleichsmischung

Die Lacke wurden 1 h bzw. 7 Tage bei 25°C gelagert.

Nach der angegebenen Lagerzeit wurde zu jedem Lack 15 g
hydroxylgruppenhaltiges Polyacrylatharz (60 % in Xylol)
gegeben und die Viskosität mit dem DIN 4-Becher zeitabhängig bestimmt.

| Viskositäts-messung nach | Lagerung 1 h DIN 4-Auslaufzeit in (s) | | Lagerung 7 Tage DIN 4-Auslaufzeit in (s) Rezeptur | |
|---|---|---|---|---|
| | 1* | 2 | 1* | 2 |
| 0 Tage | 32 | 32 | 40 | 40 |
| 1 Tag | 35 | 35 | 40 | 50 |
| 2 Tagen | 32 | 41 | 40 | 64 |
| 4 Tagen | 34 | 107 | 40 | 98 |
| 6 Tagen | 35 | Gel | 40 | Gel |
| 8 Tagen | 36 | - | 40 | - |
| 10 Tagen | 36 | - | 40 | - |
| 30 Tagen | 48 | - | 41 | - |

*) Vergleichsbeispiel

Aus der Tabelle ist klar zu ersehen, daß die Lackformulierung 1 zu keinem brauchbaren Lack führt, ersichtlich, da keine Viskositätserhöhung erfolgt.

Lackfilme, hergestellt aus der Lackmischung 2, die die für den Gebrauch notwendige Viskositätserhöhung zeigt, weisen auch eine ausreichende Härte, Chemikalienbeständigkeit und Haftung auf.

WW 5229

## Patentansprüche

1.  Mit Alkohol angefeuchtete Nitrocellulose für Polyurethanlacke, dadurch gekennzeichnet, daß die Nitrocellulose mit einem niedrigen tert. Alkohol angefeuchtet ist.

2.  Nitrocellulose nach Anspruch 1, dadurch gekennzeichnet, daß als tert. Alkohol tert. Butanol eingesetzt wird.

3.  Nitrocellulose nach Anspruch 1 oder 2, dadurch gekennzeichnet, daß die Nitrocellulose mit mindestens 25 Gew.-% tert. Alkohol befeuchtet ist.

4.  Nitrocellulose nach Ansprüchen 1 bis 3, dadurch gekennzeichnet, daß der tert. Alkohol geringe Mengen Wasser oder einen niedrigen, unverzweigten Alkohol zur Verflüssigung enthält.

5.  Polyurethanlackmischungen, gekennzeichnet durch einen Gehalt an Nitrocellulose nach Ansprüchen 1 bis 4.